Europäisches Patentamt

**European Patent Office**

**Office européen des brevets**

(19)

(11) Veröffentlichungsnummer: **0 182 171**
A2

(12) # EUROPÄISCHE PATENTANMELDUNG

(21) Anmeldenummer: **85113949.3**

(22) Anmeldetag: **02.11.85**

(51) Int. Cl.⁴: **C 01 B 25/234**

(30) Priorität: **17.11.84 DE 3442142**

(43) Veröffentlichungstag der Anmeldung: **28.05.86**
**Patentblatt 86/22**

(84) Benannte Vertragsstaaten: **BE DE FR GB IT NL SE**

(71) Anmelder: **HOECHST AKTIENGESELLSCHAFT,**
**Postfach 80 03 20, D-6230 Frankfurt am Main 80 (DE)**

(72) Erfinder: **Schimmel, Günther, Dr., Ehrenstrasse 16,**
**D-5042 Erftstadt (DE)**
Erfinder: **Gradl, Reinhard, Dr., Heimbacher Weg 27,**
**D-5042 Erftstadt (DE)**

(54) Verfahren zur Entfernung von Verunreinigungen aus Phosphorsäure.

(57) Vorliegende Erfindung betrifft ein Verfahren zur Entfernung von Verunreinigungen aus einer durch eine flüssig-flüssig Extraktion mit einem organischen Lösungsmittel vorgereinigten Naßverfahrensphosphorsäure, indem man letztere zunächst von Extraktionsmittelresten befreit, dann mit Wasserdampf oder Heißgas strippt, anschließend die Säure mit einem Dialkyl-dithiophosphorsäureester und einem feinteiligen Adsorptionsmittel in Kontakt bringt und schließlich die flüssige Phase mit Wasserdampf und Wasserstoffperoxid behandelt.

EP 0 182 171 A2

HOECHST AKTIENGESELLSCHAFT                    HOE 84/H 041

Verfahren zur Entfernung von Verunreinigungen
aus Phosphorsäure

Die vorliegende Erfindung betrifft ein Verfahren zur Entfernung von Verunreinigungen, wie Arsen, Fluor sowie organischen Verbindungen aus Naßverfahrensphosphorsäure, welche mit Hilfe einer flüssig-flüssig Extraktion in an sich bekannter Weise bereits vorgereinigt worden ist.

Bekannt ist schon (DE-A- 3 227 202), die Entfernung von Schwermetallionen und Arsen aus roher, d.h. nicht vorgereinigter Naßverfahrensphosphorsäure, indem man bei Temperaturen zwischen 10 und 100$^{\circ}$C diese Säure zunächst mit einem Diorganyldithiophosphorsäureester und anschließend mit einem Adsorptionsmittel behandelt und danach die gereinigte Phosphorsäure vom Ester und dem Adsorptionsmittel abtrennt, wobei man die Behandlung der Naßverfahrensphosphorsäure mit dem Diorganyldithiophosphorsäureester bei Temperaturen größer als 50$^{\circ}$C und die Behandlung mit dem Adsorptionsmittel bei Temperaturen kleiner als 50$^{\circ}$C durchführt.

Ferner ist schon vorgeschlagen worden, daß man zur gleichzeitigen Entfernung von Fluor und organischen Verbindungen aus einer Naßverfahrensphosphorsäure, welche mit Hilfe von Extraktionsverfahren vorgereinigt worden ist, diese Phosphorsäure in einer einzigen Verfahrensstufe in den oberen Teil eines geschlossenen Behälters einleitet, dort im Gegenstrom mit Dampf bei Temperaturen von 120 - 180$^{\circ}$C und Drucken größer als 1 bar behandelt und die so behandelte Säure im unteren Behälterteil auffängt, wo sie mit Wasserstoffperoxid umgesetzt wird. Über Kopf des Behälters werden dabei die fluorhaltigen Brüden und aus dem unteren Behälterteil die gereinigte Phosphorsäure abgezogen (deutsche Patentanmeldung Aktenzeichen P 33 25 121.5-41).

Die oben erwähnte,an sich bekannte Entfernung von Arsen aus rohen Phosphorsäuren mit Dialkyldithiophosphorsäureestern ist jedoch nicht ohne weiteres auf Reinphosphorsäuren, insbesondere nicht auf extraktiv gereinigte Säuren, übertragbar, da z.B. das Spektrum der Nebenbestandteile in beiden Säuretypen gänzlich verschieden ist.

Rohsäuren enthalten größere Mengen an Schwermetallkationen, welche einerseits eine Zersetzung des Dithioesters katalysieren können, wobei zur As-Fällung benötigtes $H_2S$ frei wird, welche andererseits aber auch in der Lage sind, das freiwerdende $H_2S$ in Form von Schwermetallsulfiden zu binden.

Extraktiv gereinigte Phosphorsäuren sind dagegen frei von Schwermetallkationen außer Arsen. Dadurch sind keine die Esterzersetzung katalysierenden Komponenten vorhanden. Bekanntlich wird aber das Arsen bei der Dithiophosphorsäureesterbehandlung partiell als Arsensulfid abgetrennt. Außerdem dürfen in einer Reinphosphorsäure keine, von einer Dithioester-Entarsenierung stammenden $H_2S$-Spuren verbleiben, da dann eine solche Säure nicht geruchsfrei wäre. Somit führt die Behandlung einer extraktiv gereinigten Säure allein mit Dithiophosphorsäureester nicht zum gewünschten Erfolg.

Überraschenderweise wurde nun gefunden, daß man aus einer mit Hilfe von organischen Lösungsmitteln vorgereinigten Naßverfahrensphosphorsäure dann zu einer reinen Phosphorsäure gelangt, die praktisch frei von Arsen, Fluor und organischen Verunreinigungen sowie auch von $H_2S$ ist, wenn man eine durch flüssig-flüssig Extraktion mit einem organischen Lösungsmittel vorgereinigte Naßverfahrensphosphorsäure zunächst von Extraktionsmittelresten befreit, indem man diese

3

Säure mit Wasserdampf oder Heißgas strippt, sie dann mit einem Dialkyldithiophosphorsäureester und einem feinteiligen Adsorptionsmittel in Kontakt bringt und nach Abtrennung des Feststoffs aus der dabei entstandenen Dispersion die erhaltene flüssige Phase zur gleichzeitigen Entfernung von Fluor und organischen Verunreinigungen in einer einzigen Verfahrensstufe mit Wasserdampf und Wasserstoffperoxid behandelt.

Als Ausgangsprodukt kann hierbei eine vorgereinigte Naßverfahrensphosphorsäure dienen, die 26 bis 35 Gew% $P_2O_5$ und noch 0,1 - 1,0 Gew% an Extraktionsmittelresten enthält. Es hat sich als sehr vorteilhaft erwiesen, wenn man die vorgereinigte Naßverfahrensphosphorsäure durch Strippen mit Wasserdampf oder Heißgas bis auf Extraktionsmittelreste von weniger als 0,02 Gew% befreit.

Weitere vorteilhafte Ausgestaltungen des erfindungsgemäßen Verfahrens sind:

a) daß man die von Extraktionsmittelresten befreite Naßverfahrensphosphorsäure auf $P_2O_5$-Konzentrationen von 40 bis 85 Gew% eindampft, bevor man sie mit dem Dialkyldithiophosphorsäureester und dem Adsorptionsmittel in Kontakt bringt;

b) daß man die Naßverfahrensphosphorsäure bei Temperaturen von 50 bis 80°C mit dem Dialkyldithiophosphorsäureester in Kontakt bringt; und

c) daß man die nach Abtrennung der Feststoffe erhaltene flüssige Phase in den oberen Teil eines geschlossenen Behälters einleitet, dort im Gegenstrom mit Dampf bei Temperaturen von 120 bis 180°C und Drucken größer als

4

1 bar behandelt, die so behandelte flüssige Phase im unteren Behälterteil aufhängt, wo sie mit Wasserstoffperoxid umgesetzt wird und man über Kopf des Behälters fluorhaltige Brüden und aus dem unteren Behälterteil gereinigte Phosphorsäure abzieht.

In nicht vorhersehbarer Weise hat sich dabei gezeigt, zum einen, daß durch eine vorausgehende Strippung der Ausgangssäure, die anschließende Entarsenierung mit Dialkyldithiophosphorsäureester zu einer weitaus stärkeren Abreicherung des Arsens in der Säure führt (vgl. nachfolgende Beispiele 1 und 2), zum anderen, daß durch diese vorangegangene Entarsenierung der Säure mit dem Dialkyldithiophosphorsäureester eine wesentliche Verringerung der $C_{org.}$-Bestandteile in der nachfolgenden Wasserdampf-Wasserstoffperoxid-Behandlung ermöglicht wird (vgl. nachfolgende Beispiele 5 und 6), so daß man durch die erfindungsgemäße Kombination von Maßnahmen eine entscheidende Verbesserung der Reinheit extraktiv vorgereinigter Naßverfahrensphosphorsäuren erzielt.

Im Prinzip verfährt man nach der erfindungsgemäßen Arbeitsweise etwa wie folgt:

Eine beispielsweise mit Amylalkohol extraktiv gereinigte Phosphorsäure fällt nach der Reextraktion mit einer $P_2O_5$-Konzentration von 26 - 35 Gew% sowie einem Amylalkohol-Gehalt von 0,1 - 1,0 Gew% an.

Diese wird dann in einer geeigneten Kolonne bei Normaldruck oder schwachem Vakuum mit Dampf gestrippt und dabei auf 0 bis 0,02 Gew% Alkohol abgereichert. Anschließend findet eine vorzugsweise mehrstufige Vakuumkonzentrierung in Eindampfapparaturen statt, wobei eine handelsübliche Säure mit ca. 60 Gew% $P_2O_5$ entsteht, die noch 50 - 500 ppm F, 50 - 200 ppm $C_{org.}$ sowie je nach Provenienz des Erzes 2- 20 ppm As enthält.

5

Diese Säure wird anschließend mit einem Dialkyldithiophosphorsäureester, vorzugsweise Bis(2-ethylhexyl)ester, bei 50 - 80°C für 10 - 100 Minuten behandelt. Nach Zugabe eines Adsorptionsmittels, vorzugsweise eines säureunlöslichen, feinteiligen Silikates, wird abfiltriert.

Das noch heiße Filtrat wird über einen Wärmeaustauscher weiter aufgeheizt und in den Kopf einer druckfesten Stippkolonne, welche mit Einbauten versehen ist, eingespeist. Im Gegenstrom wird von unten Dampf eingeblasen und die fluorhaltigen Brüden am Kopf über einen Kühler kondensiert.

In den großvolumig ausgelegten Sumpfteil der Kolonne, der mit bereits dampfbehandelter Säure gefüllt und mit einer Rührvorrichtung versehen ist, wird im Gleichstrom Perhydrol eingespeist. Die Temperaturen in der Kolonne betragen vorteilhafterweise 140 - 160°C. Über ein geeignetes Ablaßsystem wird schließlich eine klare, helle, geruchsfreie Säure entnommen.

Das erfindungsgemäße Verfahren bietet eine Reihe von Vorteilen:

1) Es wird eine Phosphorsäure höchster Reinheit erzeugt ($< 10$ ppm F, $< 10$ ppm $C_{org.}$, $< 0,1$ ppm As).

2) Die Entarsenierung ist in mehrerlei Hinsicht technisch besonders vorteilhaft:
   a) Der flüssige Dialkyldithiophosphorsäureester ist ein gut zu handhabendes Reagenz.
   b) Die benötigte Menge des eingesetzten Esters ist extrem niedrig.
   c) Es findet keine starke $H_2S$-Entwicklung statt.
   d) Die Reaktion kann in einem Rührkessel ausgeführt werden.
   e) Das Arsen kann durch die Filtration problemlos abgetrennt werden.

3) In der Dampfstrippung zur Fluor-Entfernung werden gleichzeitig die verbliebenen $H_2S$-Spuren aus der Säure ausgetrieben.

4) In der $H_2O_2$-Behandlungsstufe werden die in der Säure verbliebenen Spuren des Dialkyldithiophosphorsäureesters beseitigt. Ingesamt wird weniger Oxidationsmittel benötigt als ohne vorgeschaltete Entarsenierung mit Dialkyldithiophosphorsäureester/feinteiligem Adsorptionsmittel.

Die nachfolgenden Beispiele sollen zur näheren Erläuterung der Erfindung dienen, ohne den Gegenstand der Erfindung **auf** den Inhalt dieser Beispiele beschränken zu wollen.

Beispiel 1    (Vergleich)

Extraktiv gereinigte Naßverfahrensphosphorsäure weist nach der Reextraktion mit Wasser folgende analytische Daten auf: 32,5 Gew% $P_2O_5$; 595 ppm F; 0,5 Gew% Amylalkohol, 7 ppm As. Die Säure wird mit 0,05 Gew%/$P_2O_5$ Bis(2-ethylhexyl)dithiophosphorsäureester bei $60^{o}C$ eine Stunde lange gerührt, dann 5 Minuten mit 0,2 Gew%/$P_2O_5$ eines handelsüblichen Perlits. Nach erfolgter Durckfiltration über eine Precoat-Schicht besitzt die Säure noch 0,7 ppm As. Die restlichen Analysenwerte sind unverändert.

Beispiel 2

Durch die im Beispiel 1 eingesetzte reextrahierte Säure wird bei $95^{o}C$ drei Stunden lang Wasserdampf durchgeleitet. Anschließend besitzt diese Säure bei 32,3 Gew% $P_2O_5$ noch 47 ppm $C_{org.}$, 410 ppm F sowie 7 ppm As. Danach wird die Säure gemäß Beispiel 1 mit dem Ester und dem Perlit weiterbehandelt. Es resultiert ein As-Wert von 0,08 ppm.

Beispiel 3 (Vergleich)

Die im Beispiel 1 eingesetzte Phosphorsäure wird bei 105 mbar und 110°C aufkonzentriert. Es resultiert eine Säure mit 60,8 Gew% $P_2O_5$, 400 ppm $C_{org.}$, 140 ppm F sowie 13 ppm As.

Diese Säure wird bei 60°C eine Stunde lang mit 0,05 Gew%/ $P_2O_5$ von Bis(2-ethylhexyl)dithiophosphorsäureester gerührt, anschließend 5 Minuten mit 0,1 Gew%/$P_2O_5$ eines handelsüblichen Perlits. Nach Druckfiltration über eine Perlit-Precoat-Schicht beträgt der As-Gehalt in der Säure 0,2 ppm und der $C_{org.}$-Gehalt 350 ppm. Die restlichen Werte sind unverändert.

Beispiel 4

Zur Konzentration gemäß Beispiel 3 wird die vorher gestrippte Phosphorsäure aus Beispiel 2 eingesetzt. Danach ergeben sich für die Säure die folgenden Analysenwerte: 60,1 Gew% $P_2O_5$, 105 ppm $C_{org.}$, 115 ppm F sowie 13 ppm As. Nach der sich anschließenden, in Beispiel 3 beschriebenen Entarsenierung besitzt diese Phosphorsäure bei sonst unveränderten Daten folgende Werte: 90 ppm $C_{org.}$, 0,05 ppm As.

Beispiel 5 (Vergleich)

Die nach Beispiel 4 gestrippte und konzentrierte Phosphorsäure wird in einem Wärmetauscher auf 150°C erwärmt und in eine Druckkolonne eingespeist, in die im Gegenstrom Dampf mit einem Druck von 6 bar eingeblasen wird. In der mit einem Rührwerk versehenen Blase der Kolonne wird die Säure aufgefangen und mit $H_2O_2$ behandelt.

Danach wird eine gereinigte Phosphorsäure mit 60,0 % $P_2O_5$, 10 ppm $C_{org.}$, 13 ppm As und 8 ppm F abgezogen.

Beispiel 6

Die nach Beispiel 4 gestrippte, konzentrierte und zusätzlich entarsenierte Phosphorsäure wird in eine Druckkolonne gemäß Beispiel 5 eingespeist und mit Dampf und $H_2O_2$ behandelt.

Es wird eine wasserhelle Säure mit folgenden Restverunreinigungen abgezogen:

$P_2O_5$ : 59,9 %   $C_{org.}$ : 5 ppm   F : 7 ppm   As : 0,05 ppm Diese Säure besitzt Lebensmittelqualität.

1

## Verfahren zur Entfernung von Verunreinigungen aus Phosphorsäure

Patentansprüche:

1. Verfahren zur Entfernung von Verunreinigungen aus Phosphorsäure, dadurch gekennzeichnet, daß man zur Entfernung von Arsen, Fluor und organischen Verunreinigungen aus einer durch eine flüssig-flüssig Extraktion mit einem organischen Lösungsmittel vorgereinigten Naßverfahrensphosphorsäure, letztere zunächst von Extraktionsmittelresten befreit, indem man diese Säure mit Wasserdampf oder Heißgas strippt, sie dann mit einem Dialkyldithiophosphorsäureester und einem feinteiligen Adsorptionsmittel in Kontakt bringt und nach Abtrennung des Feststoffs aus der dabei entstandenen Dispersion die erhaltene flüssige Phase zur gleichzeitigen Entfernung von Fluor und organischen Verunreinigungen in einer einzigen Verfahrensstufe mit Wasserdampf und Wasserstoffperoxid behandelt.

2. Verfahren nach Anspruch 1, dadurch gekennzeichnet, daß man als Ausgangsprodukt eine vorgereinigte Naßverfahrensphosphorsäure einsetzt, die 26 bis 35 Gew% $P_2O_5$ und noch 0,1 - 1,0 Gew% an Extraktionsmittelresten enthält.

3. Verfahren nach Anspruch 1 oder 2, dadurch gekennzeichnet, daß man die vorgereinigte Naßverfahrensphosphorsäure durch Strippen mit Wasserdampf oder Heißgas bis auf Extraktionsmittelreste von weniger als 0,02 Gew% befreit.

2

4. Verfahren nach einem der Ansprüche 1 bis 3, dadurch gekennzeichnet, daß man die von Extraktionsmittelresten befreite Naßverfahrensphosphorsäure auf $P_2O_5$-Konzentrationen von 40 bis 85 Gew% eindampft, bevor man sie mit dem Dialkyldithiophosphorsäureester und dem Adsorptionsmittel in Kontakt bringt.

5. Verfahren nach einem der Ansprüche 1 bis 4, dadurch gekennzeichnet, daß man die Naßverfahrensphosphorsäure bei Temperaturen von 50 bis 80°C mit dem Dialkyldithiophosphorsäureester in Kontakt bringt.

6. Verfahren nach einem der Ansprüche 1 bis 3, dadurch gekennzeichnet, daß man die nach Abtrennung der Feststoffe erhaltene flüssige Phase in den oberen Teil eines geschlossenen Behälters einleitet, dort im Gegenstrom mit Dampf bei Temperaturen von 120 bis 180°C und Drucken größer als 1 bar behandelt, die so behandelte flüssige Phase im unteren Behälterteil aufhängt, wo sie mit Wasserstoffperoxid umgesetzt wird, und man über Kopf des Behälters fluorhaltige Brüden und aus dem unteren Behälterteil gereinigte Phosphorsäure abzieht.